# EUROPEAN PATENT APPLICATION

(11) **EP 3 211 625 A1**
(43) Date of publication of application: **30.08.2017**
(21) Application number: 14811946.4
(22) Date of filing: 24.10.2014
(51) Int. Cl.: G09B 19/00, A63B 24/00

(54) **SYSTEM AND METHOD FOR EVALUATING THE PERFORMANCE OF A GOLF PLAYER**

(71) Applicant: Swing Play, S.L., 29660 Malaga (ES)
(72) Inventor: ROSA RUEDA, Andres, E-29660 Malaga (ES)
(74) Representative: Smith, Jeremy Robert
(86) International application number: PCT/ES2014/070804
(87) International publication number: WO 2016/062903

(57) **Abstract**

System (1) and method to evaluate the performance of a golf player, where the system (1) includes, at minimum, an activity tracker (2) of the club's movements (3) with, at minimum, one gyroscope (5) and one accelerometer (4); it also includes one heart rate monitor (8), one hub (12), and a remote computer (19) in which it runs software able to store and process the received data and show the variables of interest, the hub and remote computer (19) being connected through the mobile voice and data network (17), and the activity tracker, (2), heart rate monitor (8) and hub (12) through wireless links. The method includes the phases required for the readings of the data and its transmission in real time to the remote computer (19) to be processed by the software that runs on said remote computer (19).

## Description

### THE OBJECT OF THE INVENTION

The present invention refers to a system and method to assess the performance of a golf player.

### BACKGROUND OF THE INVENTION

Currently there are some existing devices known to analyze the performance of a golf player.

For example, some devices are known to be able to detect electromagnectic waves reflected on the ball, study them at certain points, and to process this information, as well as other variables, to obtain the axis and speed of the ball's rotation, and in that way determine its trajectory, speed, the swing speed, the angle of attack and others. However, it is a complex and expensive device that requires regulation and management by professional personnel which prevents its free use by any type of user. In addition, its own configuration, external to the game's elements (ball and club), prevent its usage in competitions by the current regulations.

Other simpler systems include the use of a device that the player can carry which is equipped with a geographic positioning system, a radio frequency identification (RFID) reader positioned in the clubs, and a computer which associates the reading of the RFID chip to the position in which it is, so that the golfer's device reads the position of the club each time that he or she is making a swing, leaving all the swings located. Afterwards this information can be downloaded to an external computer or viewed on an inteligent device. On the computer or inteligent device runs an application that is capable of analyzing the number of swings performed on each hole, the distance of each swing, the type of club used, etc. This information is of little use in professional golf because it only provides data coming from the position of the ball, omiting data on the mechanisms of the golfer's swing.

Other systems include a sensor attached to the club provided with an acelerometer and near-field-communication-enabled (NFC-enabled) to be connected to a portable device, such as a smartphone or intelligent tablet, where an information application analizes the data and is even capable of drawing the trajectory of the club. Since the information offered by the accelerometer is very limited (position, speed, and acceleration of the club) and it does not offer any information on the trajectory of the ball, it is a system that serves mainly as entertainment or to improve the amateur's game.

Therefore, on one hand, we have devices that offer a lot of information but are more expensive and require specialized personal management, and on the other hand, we have other devices that are simpler but offer more limited information. Besides, the complex and more informational devices cannot generally be used in official competitions, which is a setting of maximum interest to the study of the performance of a golfer.

### DESCRIPTION OF THE INVENTION

The system of the invention works in an ideal way to evaluate the performance of a golf player because it solves the technical problems laid out.

According to the invention, the system includes, at minimum, an activity tracker of the club's movement, which includes, at minimum, an accelerometer, a gyroscope, the first wireless link, and an primary power supply, found arranged with an activity tracker in each club belonging to a selected group of clubs, preferably, at minimum, the drivers and putters. The system also includes a heart rate monitor with a second wireless link and a second power supply and it also includes a hub, equipped with a global positioning unit, a remote control, such as a button, in order to initiate the capture of the club's swing, a third wireless link intended to connect with the first wireless link from the activity tracker and with the second wireless link from the heart rate monitor, a link from the data to the mobile voice and data network, with a third power supply.

Furthermore, the system also includes a remote computer connected to the mobile voice and data network, which runs software able to store and process the obtained readings and show the variables of interest. This centralization of the data allows its immediate comparison with the data of other competitors and can display these comparisons, which can be useful in sport broadcasts.

With this configuration, therefore, the data from every variable of interest can be compiled to effectively study the golfer's performance with a configuration that is simple but powerful and viable, considering the power needed for its running. In addition, it can be used directly by any user without the need for calibration or the assistance of specialized personnel, and because the data are treated remotely and the activity tracker can be placed in the interior of the club, it is possible to use it in official golf tournaments as well as for the broadcast or monitoring of such data.

Meanwhile, the method of the invention includes, in its basic form, the following stages implemented within the hub:
- A signal coming from the remote or button to initiate the capture of a club's swing. The activation of this remote indicates that a swing is going to be performed, and activates the system to register the readings of the variables detected by the system and associate them to that particular swing,
- sending to the remotely connected computer an initial signal of data capture,
- the activation of the GPS unit and transmission of the unit's reading through the mobile voice and data network to the remotely connected computer,
- the deactivation of the GPS unit,
- the request to connect with the activity tracker of the club's movements and with the heart rate monitor through the third wireless link,
- scheduled detection of the presence of the activity tracker on the used club is read, with a feed command given to the accelerometer and the gyroscope after a positive readout, or, continuing to the next phase in a the case of a negative readout, that is, when there is no response from the activity tracker from not using the club,
- the broadcast of the obtained readings to the remote computer through the mobile voice and data network,
- notification of reception and storage of the data, coming from the remote computer, through the mobile voice and data network, and the third wireless link's deactivation.

Meanwhile, it implements the following phases in each activity tracker of the club's movement:
- Establishment of the connection with the hub through the second wireless link and reception of the order,
- the readings broadcast,
- the detection of the third wireless link's deactivation,
- and the start of hibernation.

Meanwhile, the following phases are implemented in the remotely connected computer:
- Input of a signal to initiate the capture of the reading coming from the hub,
- Reading of the signal,
- Processing of the readings to detect the sudden variation in the acceleration and/or position of the club,
- Storage of the acceleration and near position data to the extreme values of acceleration,
- And notification of the stored data delivered to the hub through the mobile voice and data network.

### DESCRIPTION OF THE PICTURES

Figure # 1.- Shows a general view of the system.
Figure # 2.- Shows a detailed view of an activity tracker inserted in a selected golf club, according to the invention.
Figure # 3.- Shows a detailed view of the heart rate monitor.
Figure # 4.- Shows a simplified view of the hub.

### PREFERRED DEVELOPMENT OF THE INVENTION

The system (1) to evaluate the performance of a golf player (100) includes, at minimum, an activity tracker (2) of the club's movements, (3) which, as can be seen in Figure #2, includes at minimum one accelerometer (4), one gyroscope (5), the first wireless link (6) and the first power supply (7), with an activity tracker placed (2) in each club (3) belonging to a selected group of clubs, which usually includes at minimum the drivers and putters.

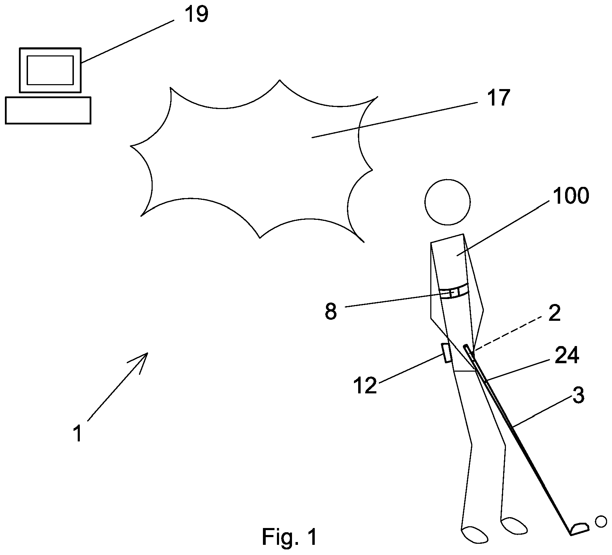

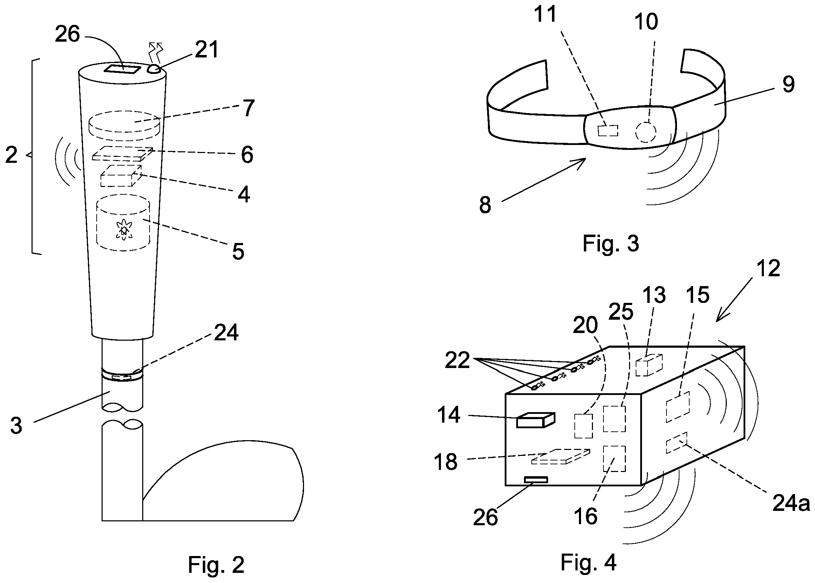

The system (1) also includes a heart rate monitor (8), with its corresponding fastening strap (9), covering the heart rate monitor (8), as well as, seen on the Figure #3, a second wireless link (10) and a second power supply (11).

The system (1) also includes a hub (12), which, as can be seen in Figure # 4, includes a geographic location link (13) that is, a GPS®, a remote (14) -a button in this example- to initiate the capture of a club's swing (3), a third wireless link (15) intended to connect with the first wireless link (6) of the activity tracker (2) and the second wireless link (10) of the heart monitor (8), a link (16) to the mobile voice and data network (17), and a third power supply (18).

Finally, the system (1) also includes a remote computer (19) (see Figure # 1), connected to said mobile voice and data network (17) where running software is able to store and process the obtained readings and show the variables of interest in an ideal way.

The data link (16) to the mobile voice and data network (17) preferably includes a link to the Third Generation (3G®) through the Universal Mobile Telecomunications Service (UMTS®).

In addition, the invention has provided that the system can include a temperature and/or humidity sensor (20), which will allow it to register those variables to study their influence on the performance of the golfer, through software that processess the data that runs on the remote computer (19). This temperature and/or humidity sensor (20) can preferably be found in the hub (12) to enable the wired connection and to avoid the high energy consumption of wireless transference.

The wireless links (6, 10, 15) implemented in the activity tracker (2), hub (12) and heart rate monitor (8) preferably include links by radio reception on the ISM band of low and high speeds (ideally bluetooth® 4.0)

Additionally, the first power source (7) and/or the second power source (11) and/or the third power source (18) include rechargeable and/or replaceable batteries. The possibility of recharge minimizes the cost, but the possibility of replacement enables the continued use of the system if the rechargeable battery runs down and there is ability to recharge.

Nevertheless, to minimize the consumption of energy, the invention has provided that, at minimum, the first power supply (7) and the third power supply (18) includes on/off switches, not represented.

The invention has also provided that the hub (12) and/or each activity tracker (2) also include some visual (21, 22) and/or accoustic status signs. These signs preferably include visual signals (21, 22) which include LED diodes, for instance, placed in each activity tracker (2) a first visual signal (21) of connection to the hub (12), and in the hub (12) another visual signal (22) of connection to the operating activity tracker (2) and/or with the heart rate monitor, the activation of the geographic positioning system (13), a low battery indicator, as well as an on/off indicator. Each activity tracker (2) and/or the hub (12) will be able to include as many signals as is desired to indicate the information that is determined to be needed.

To allow the personalization or identification of the different clubs, the invention has provided that the system (1) includes, additionally, a personal data record, such as the type of club (3) the golfer's identification, profile and/or phone number. This personal data record preferably includes contact-free smartcards (24) -for instance MIFARE® cards, which are memory cards that are activated by proximity - able to store data, and that are located in the different clubs, typically in all of them, thanks to its low cost. The record of personal data stored in such contact-free smartcards (24), is read by a data reader (24a) which is located in the hub (12) and that is able to transmit the data readings to the link (16) for its transmission to the remote computer (19). Before making a swing, the card corresponding to the club that is to be used will be read (3) or in a flaw or absence of a reading, the system will interpret that the last club used will be used again.

Likewise, the invention has provided that the hub (12) can additionally include a temporary memory (25) to store the received data, where it will be stored in the absence of a connection to the mobile voice and data network (17). The contact-free smartcards will also store this data (24).

Meanwhile, the activity tracker (2) and/or the hub (12) can include data exchange connectors (26) and/or rechargable batteries including its power supply (7, 18). These connectors (26) preferably include microUSB® connectors.

The second activity tracker (2) of the club's movements is located in the interior of each club's body (3), without being an exterior added element, which allows its regulated use during official championships so long as direct information is not offered to the player during the course of the game, while the hub (12) includes a method of attachment to the clothing by the user, such as straps, hooks, bandoleers, etc, which are not represented.

The invention also includes a method to evaluate the performance of a golf player, and it will be applied when swinging, including the following phases implemented by the hub (12):
- Signal coming from the remote (14) to begin the capture of the swing of a club (3),
- Delivery to the remotely connected computer (19) a signal to initiate the start of data captures,
- Activation of the GPS unit (13) and transmission of the position reading through a link (16) to the mobile voice and data network (17) to the remotely connected computer (19),
- Deactivation of the GPS (13),
- Request for connection to the activity tracker (2) of the club's movements (3) and with the heart rate monitor (8) through the third wireless link (15),
- Timed detection of the presence of the activity tracker (2) on the club (3), with a feed command given to the accelerometer (4) and the gyroscope (5) after a positive readout, or, continuing to the next phase in a the case of a negative readout, that is, when there is no data from the activity tracker (2) from not using the club,
- Transmission of the obtained readings to the remote computer (19) by the data link (16) through the mobile voice and data network (17),
- Reception of the notification of performed data storage, coming from the remote computer (19), to the data link (16) through the mobile voice and data network (17),
- And deactivation of the third wireless link (15).

While the following phases are implemented in each activity tracker (2) of the club's movements (3):
- Establishment of the connection with the hub (12) through the first wireless link (6) and reception and execution of the feed order to the accelerometer (4) and gyroscope (5),
- Transmission of the accelerometer (4) and gyroscope (5) readings through the first wireless link (6),
- Detection of the deactivation of the third wireless link (15),
- And the entering of sleep-mode.

While it implements the following phases in the heart rate monitor (8):
- Establishment of the connection with the hub (12) through the second wireless link (10) and the reception of the order of transmission of readings,
- Reading of transmissions,
- Detection of the deactivation of the third wireless link (15),
- And the entering of sleep-mode.

And while the following phases are being implemented in the remotely connected computer (19):
- The entrance of the signal to begin the capture of readings coming from the hub (12),
- The reception of readings,
- The processing of readings to detect the sudden variation of the club's acceration and/or position (3),

- Storage of the acceleration and/or position data to the extreme values of acceleration,
- And delivery of notification of completed data storage to the hub (12) by the data link (16) through the mobile voice and data network (17).

This method can include some additional phases implemented by the hub (12), such additional phases include:
- The activation of a temperature and/or humidity sensor (20),
- The reading of said sensor and transmission of that reading by the data link (16) through the mobile voice and data network (17) to the remotely connected computer (19) and deactivation of said sensor.

These first additional phases can be performed at any point on a collection cycle of the corresponding data from a swing.

The method can also include additional second phases implemented by the hub (12). Such second additional phases include:
- Timed activation, after the operation of the remote (14) during the capture of a swing, of a data reader (24a) stored in the contact-free smartcards (24),
- The reading of the smartcard (24) from the club used (3),
- The transmission of said reading by the data link (16) through the mobile voice and data network (17) to the remotely connected computer (19) and/or the recovery of the data from the last club used. That is, when during the timed activation, the reading device (24a) does not perform any reading because no club has been close to the detector on the reading device (24a), and therefore no reading is transmitted to the remote computer (19).

The method can also include a third additional phase implemented by the hub (12), said third additional phase includes the detection of the existing connection to the remote computer (19) through a mobile voice and data network (17), and, in the negative case, the diversion of the delivery of the readings destined to said remote computer (19) to a temporary memory storage (25) of the received data, from which they can be downloaded once the connection to the mobile voice and data network has been restablished (17). This phase is automatically implemented in the case that our constant sampling of the integrity of the connection to the remote computer (19) through the mobile voice and data network (17) detects an error.

Lastly, the method can also include a fourth additional phase implemented by the hub (12), which includes the scheduled reading of the temperature and/or humidity sensor (20) and/or of the heart rate monitor (8), and the remission of the readings to the remote computer (19). In this phase these variables can also be monitored on a programmed schedule.

It is understood that the protection covers the phases used in the described order or in any other order that produces the same effects.

Having sufficiently described the nature of the invention, note that its description and its preferred method of development must not be interpreted in a limited manner, but rather covering all possible variations of use following the contents of this specification and claims.

## Claims

1. System (1) to evaluate the performance of a golf player **wherein** it includes, at minimum:
an activity tracker (2) of the club's movements (3), which includes, at minimum, an accelerometer (4), a gyroscope (5), a first wireless link (6), and a first power source (7); an activity tracker being placed (2) in each club (2) belonging to a selected group of clubs; a heart rate monitor (8) that includes a second wireless link (10) and a second power source (11); a hub (12) which includes a geographic positioning system (13), a remote control (14) to initiate the capture of a swing being performed by a club (3), a third wireless link (15) intended to be connected with the first wireless link (6) on the activity tracker (2) and with the second wireless link (10) on the heart rate monitor (8), a data link (16) to the mobile voice and data network (17) and a third power source (18); and a computer (19), remotely connected through a mobile voice and data network (17), where software is able to store and process the received readings and show all the variables of interest.

2. System (1) to evaluate the performance of a golf player according to claim # 1 **wherein** the data link (16) to the mobile voice and data network (17) includes a third generation link through the universal mobile telecomunications system.

3. System (1) to evaluate the performance of a golf player according to any of the previous claims **wherein** it additionally includes a temperature and/or humidity sensor (20).

4. System (1) to evaluate the performance of a golf player acordding to claim # 3 wherein a temperature and/or humidity sensor (20) is placed in the hub (12).

5. System (1) to evaluate the performance of a golf player according to any of the previous claims **wherein** the wireless links (6, 10, 15) include links through radio frequency in the ISM band of low power and high speed.

6. System (1) to evaluate the performance of a golf player according to any of the previous claims **wherein** the first power source (7) and/or the second power source (11) and/or the third power source (18) include rechargeable and/or replaceable batteries.

7. System (1) to evaluate the performance of a golf player according to any of the previous claims **wherein,** at minimum, the first power source (7) and the third power source (18) include on/off switches.

8. System (1) to evaluate the performance of a golf player according to any of the previous claims **wherein** the hub (12) and/or each activity tracker (2) additionally include visual signals (21, 22) and/or status sounds.

9. System (1) to evaluate the performance of a golf player according to claim # 8 wherein the visual signals (21, 22) include LED diodes.

10. System (1) to evaluate the performance of a golf player according to claim # 9 wherein each activity tracker (2) includes a first visual signal (21) of connection to the hub (12).

11. System (1) to evaluate the performance of a golf player according to claims 9 and 10 **wherein** the hub (12) includes a second visual signal (22) of connection to the operational activity tracker (2) and/or with the heart rate monitor, of the activation of the geographic positioning system (13), and/or an indication of low battery and of the on/off switch.

12. System (1) to evaluate the performance of a golf player according to any of the previous claims **wherein** it additionally includes a record of its own data.

13. System (1) to evaluate the performance of a golf player according to claim # 12 wherein the recording of data includes contact-free smartcards (24) able to store data, which are located in the different clubs (3); and a reader (24a) of the data stored in said contact-free smartcards (24), which is located in the hub (12), that is able to deliver readings of data to the data link (16) for its transmission to the remote computer (19).

14. System (1) to evaluate the performance of a golf player according to any of the previous claims **wherein** the hub (12) additionally includes a temporary memory (25) to store the readings received.

15. System (1) to evaluate the performance of a golf player according to any of the claims #6 through 14 **wherein** the activity tracker (2) and/or the hub (12) include connectors for data exchange (26) and/or recharging of the included batteries from their power source (7, 18).

16. System (1) to evaluate the performance of a golf player according to any of the previous claims **wherein** each activity tracker (2) of the club's movements is located in the interior of the body of each selected club (3).

17. System (1) to evaluate the performance of a golf player according to any of the previous claims **wherein** selected clubs include, at minimum, the drivers and putters.

18. System (1) to evaluate the performance of a golf player according to any of the previous claims **wherein** the hub (12) includes methods to attach to the clothing of the user.

19. Method to evaluate the performance of a golf player **wherein** it includes the following phases implemented in the hub (12) including:
- Signal coming from the remote (14) to initiate the capture of a club's swing (3),
- Delivery to the remotely connected computer (19) a signal of the start of captured data,
- Activation of the geographic positioning system (13) and transmission of the position reading, by a data link (16) through a mobile voice and data network (17), to the remotely connected computer (19),
- Deactivation of the geographic positioning system (13),
- Request for connection to the activity tracker (2) of the club's movements (3) and with the heart rate monitor (8) through a third wireless link (15),
- Timed detection of the presence of the activity tracker (2) on the club (3), with a feed command given to the accelerometer (4) and the gyroscope (5) after a positive readout, or, continuing to the next phase in a the case of a negative readout,
- Transmission of the obtained readings to the remote computer (19) by a data link (16) through the mobile voice and data network (17),
- Reception of notification of the storage of the performance data, coming from the remote computer (19), by a data link (16) through the mobile voice and data network (17), and the deactivation of the third wireless link (15).
While it implements the following phases in each activity tracker (2) of the club's movements (3):
- Establishment of the connection of the hub (12) through the first wireless link (6) and the reception and execution of the feed order by the accelerometer (4) and gyroscope (5),
- Transmission of the readings of the accelerometer (4) and gyroscope (5) through the first wireless link (6),
- Detection of the deactivation of the third wireless link (15), and the entering of sleep-mode.
While it implements the following phases in the heart rate monitor (8):
- Establishment of connection with the hub (12) through the second wireless link (10) for the reception and transmission of the readings,
- Transmission of the readings,
- Detection of the deactivation of the third wireless link (15), and
- Entrance into sleep-mode.
And in the meantime implements the following phases in the remotely connected computer (19):
- Detection of the signal to initiate the capture of the readings coming from the hub (12),
- Reception of the readings,
- The proccessing of the readings of the detection of the sudden variation in the acceleration and/or position of the club (3),
- Storage of the acceleration and/or position data close to the extreme values of the highest acceleration, and
- Delivery of the notification of the performed storage of the data to the hub (12) through the data link (16) to the mobile voice and data network (17).

20. Method to evaluate the performance of a golf player according to the claim # 19 wherein it includes some first additional phases implemented within the hub (12), including such first additional phases as:
- Activation of a temperature and/or humidity sensor (20),
- The reading of said device and transmission of that reading by the data link (16) through the mobile voice and data network (17) to the remotely connected computer (19), and the deactivation of said device.

21. Method to evaluate the performance of a golf player according to the claims # 19 or 20 **wherein** it includes second additional phases implemented within the hub (12), including such additional second phases as:
- Timed activation, after the operation of the control (14) during the capture of a swing, of a data reader (24a) stored in the contact-free smartcards (24),
- The reading of the smartcard (24) from the club used (3),
- The transmission of said reading by the data link (16) through the mobile voice and data network (17) to the remotely connected computer (19) and/or the recovery of the data from the last club used.

22. Method to evaluate the performance of a golf player according to claims # 19 through 21 **wherein** it includes a third additional phase implemented by the hub (12), including such third additional phases as the detection of the connection with the remote computer (19) through a mobile voice and data network (17), and in negative case, the diversion of the delivery of the readings destined to said remote computer (19) to a termporary memory (25) to store the received data.

23. Method to evaluate the performance of a golf player according to the claims # 19 through 22 **wherein** it includes a fourth additional phase implemented by the hub (12), that includes a scheduled reading of the temperature and/or humidiity sensor (20) and/or the heart rate monitor (8), and the transmission of the readings to the remote computer (19).
